# EUROPEAN PATENT APPLICATION

(11) **EP 0 795 837 A1**
(43) Date of publication of application: **17.09.1997**
(21) Application number: 97301123.2
(22) Date of filing: 21.02.1997
(51) Int. Cl.: G06K 11/18, G06F 3/033

(54) **User pointing device with touch sensing pads for selection and pressure input**

(30) Priority: 12.03.1996 US 614455
(71) Applicant: SUN MICROSYSTEMS, INC., Mountain View, California 94043-1100 (US)
(72) Inventor: Bergman, Eric D., Palo Alto, California 94301 (US)
(74) Representative: Hogg, Jeffery Keith

(57) **Abstract**

A user input device suitable for use with a computer incorporating a pad that senses disturbances in an electric field and generates a force signal responsive to pressure on the pad. This user input device further incorporates a transducer, separate from the pad, that generates a position signal. The pad may provide a selection function of the user input device, e.g., a function similar to the one provided by a mouse button. Computer applications may take advantage of the force signal to control operations responsive to the pressure on the pad. Since the pad may be implemented without moving parts, a high reliability selection mechanism is provided. The transducer may provide a pointing function of the user input device. The transducer may be implemented using a ball and/or rollers, as in a mouse or trackball device. Thus, the user input device of the present invention may be implemented so as to preserve the interaction paradigm of the mouse or trackball device while providing greater mechanical reliability of the selection mechanism.

## Description

### BACKGROUND OF THE INVENTION

The present invention relates to a user input device for a computer and more particularly to a pointing device that includes a sensing pad capable of measuring pressure applied by a conducting object by monitoring disturbance of an electric field.

Computer users employ various pointing devices to assist in input. These pointing devices include "mice", joysticks, trackball devices, tablets etc. Typically, the pointing device performs two input functions, pointing and selection. The pointing function involves optical or mechanical tracking of user manipulation of the pointing device. To accommodate selection, the pointing device incorporates buttons that are implemented as mechanical switches. These buttons are pressed in order to select, drag, or otherwise operate upon objects at which the user points at with the pointing device. Problems with the current mechanical buttons include:
1. Button susceptibility to mechanical wear and damage from environmental contamination (liquids, dust, etc.). These problems directly affect reliability and length of service of pointing devices.
2. Inability to specify range of button force (e.g., buttons are either on or off, not on 20% or 30% or some other intermediate value). The lack of continuous variability in button input means that interactions that require more than a binary action (e.g. on/off) either require an alternative input device that accepts pressure or additional input specification through additional manipulation of the pointing device, keyboard modifiers, or menu commands.
3. Requirement that users repetitively provide sufficient mechanical force to activate button switches, and in cases where dragging is required, hold a button down. Some users find even the low force required by these buttons bothersome.

A recently developed pointing device, the touchpad, represents a partial solution to these problems. The trackpad allows users to move the screen pointer by dragging a finger across the pad surface, and to "click" on an object or menu by tapping a finger on the pad. Dragging an object or extending a selection is accomplished by tapping twice and holding the finger down on the second tap. The primary advantages of touch pads are their small size, lack of mechanical parts to wear or be damaged, and the low force required to operate them. Some touch pads record pressure information as well, allowing users with advanced or 3D applications variable input in pointing or manipulating.

Unfortunately, touch pads while addressing many of the above problems carry many drawbacks. Among the problems with touch pads are:
1. It is often difficult to move the screen pointer with sufficient precision. This is especially true in painting and drawing applications and for users who have poor fine motor control. The resolution of a touch pad is effectively limited by the size of a finger tip relative to the pad surface, making the touch pad effectively unusable for applications that require precision.
2. Many users find the selection function as implemented by a touch pad difficult to use. The touch pad user must tap twice and hold the finger down in order to distinguish a select-hold operation from a simple select. This operation requires more dexterity and timing than clicking and holding using a mouse.
3. Touch pads require that the user's finger be held down while dragging, which causes serious problems when the finger reaches the edge of the touch pad before a dragged object has reached its desired location or a selection has been extended as desired.
4. Touch pads, when not directly mounted to a keyboard or laptop computer, are typically small and lightweight. This makes it easy for a user to unintentionally move the touch pad while trying to use it, leading to errors and frustration.

What is needed is a user input device which incorporates a selection function that provides improved reliability and the option of variable intensity selection input while requiring no more dexterity than mice or trackball devices.

### SUMMARY OF THE INVENTION

Embodiments of the present invention provide a user input device suitable for use with a computer. The user input device provided by one embodiment incorporates a pad that senses disturbances in an electric field and generates a force signal responsive to pressure on the pad. This user input device further incorporates a transducer, separate from the pad, that generates a position signal. The pad may provide a selection function of the user input device, i.e., a function similar to the one provided by a mouse button. Computer applications may take advantage of the force signal to control operations responsive to the pressure on the pad. Since the pad may be implemented without moving parts, the present invention provides a high reliability selection mechanism. The transducer may provide a pointing function of the user input device. The transducer may be implemented in conjunction with a ball and/or rollers, as in a mouse or trackball device. Thus, the user input device of the present invention may be implemented so as to preserve the interaction paradigm of the mouse or trackball device while providing greater mechanical reliability of the selection mechanism.

In one embodiment, the user input device is a mouse or trackball device having one or more electric field disturbance sensitive pads instead of mechanical buttons. The traditional mouse or trackball mechanism, whether mechanical or optical incorporates the transducer that generates a position signal. In an alternative embodiment, the user input device is a tablet with a puck that incorporates a touch sensing pad as a selection device. The tablet serves as the transducer that generates a position signal.

In accordance with the invention, a computer application may take advantage of force information developed by the electric field disturbance sensitive pads. For example, in a drawing or painting application the position signal may specify the direction and/or location of a line to be drawn while the force signal may control the thickness of a line. If a first drawing object is to be moved relative to a second drawing object, the position signal may control movement of the first drawing object while the force signal may control whether a display shows the first drawing object moves under or over the second drawing object when they overlap each other. In the context of an application that displays multiple pages of a document, the user may flip through or scroll through pages at a rate determined by the force signal.

A further understanding of the nature and advantages of the inventions herein may be realized by reference to the remaining portions of the specification and the attached drawings.

### BRIEF DESCRIPTION OF THE DRAWINGS

Fig. 1 depicts a computer system suitable for use with the present invention.

Fig. 2A depicts a mouse employing a ball that rolls along a flat surface and modified with touch sensing pads in accordance with one embodiment of the present invention.

Fig. 2B depicts a mouse employing two rollers that roll along a flat surface and modified with touch sensing pads in accordance with one embodiment of the present invention.

Fig. 3 depicts a trackball device modified with touch sensing pads in accordance with one embodiment of the present invention.

Fig. 4 depicts a tablet-puck combination device modified with touch sensing pads in accordance with one embodiment of the present invention.

Fig. 5 depicts a simplified representation of a touch sensing pad in accordance with one embodiment of the present invention.

Fig. 6A depicts a computer display wherein a first drawing object slides below a second drawing object responsive to a force signal developed by a touch sensing pad in accordance with one embodiment of the present invention.

Fig. 6B depicts a computer display wherein a first drawing object slides below a second drawing object responsive to a force signal developed in accordance with one embodiment of the present invention.

Fig. 7 depicts a computer display wherein a user draws a line with thickness varying responsive to a force signal developed in accordance with one embodiment of the present invention.

Fig. 8 depicts a computer display wherein a user may flip through or scroll multiple pages of a document responsive to a force signal developed in accordance with one embodiment of the present invention.

### DESCRIPTION OF SPECIFIC EMBODIMENTS

In one embodiment, the present invention provides a mouse, with touch sensing pads used in place of the buttons. The touch sensing pads may be implemented without moving parts as, e.g., a series of conductive strips configured to measure a change of capacitance that results from the proximity of a user's finger. Each touch sensing pad produces a force signal based on the magnitude of the change of capacitance. A force signal above a threshold may be interpreted in the same way as depression of a button. The touch sensing pads thus may provide the selection function of the mouse.

In this mouse embodiment, the pointing function of the mouse is provided by any known technology. For example, a mouse will often include a ball adapted to roll along a flat surface with first and second rollers engaged to the ball to resolve the mouse's motion along perpendicular axes. A measurement of the rotation of the rollers produces x and y position signals. Alternatively, the rollers may themselves be adapted to roll along the flat surface. Other mice develop position signal using optical techniques by sensing movement over a specially marked line grid. The present invention does not require any particular mechanism for developing the position signals.

Users can move the mouse and point, "click," and drag using the familiar operations used with prior art mice. However, the present invention also provides for a non-binary interpretation of the force signal. A computer application may control operations based on the amount of pressure applied to the touch pad. In a drawing application, for example, a user slides a first object above or below a second object by varying button force. Menus, options, and operations may be modified by varying the pressure applied during selection. In an application that displays documents, pressing on a touch sensing pad forcefully may cause pages to turn faster, while reducing pressure slows down the turning of pages. This kind of interaction may be extended to a wide variety of contexts and applications.

Unlike a mouse with mechanical buttons, however, this mouse provides higher reliability because the touch sensing pads do not include moving parts. Furthermore, the touch sensing pads require less force and thus provide greater user comfort. The mouse with touch sensing pads as a selection and/or pressure input provides significantly more accurate positioning than touchpads. As compared to tablets, the mouse constructed in accordance with the present invention is less expensive to produce and requires less user force. Furthermore, this mouse advantageously employs the interaction paradigm familiar to many users.

The present invention is not limited to any particular pointing device. A trackball device may incorporate touch sensing pads for selection and/or pressure input in accordance with the present invention. Another example application is the substitution of touch sensing pads for buttons on a puck of a combination puck-tablet input device.

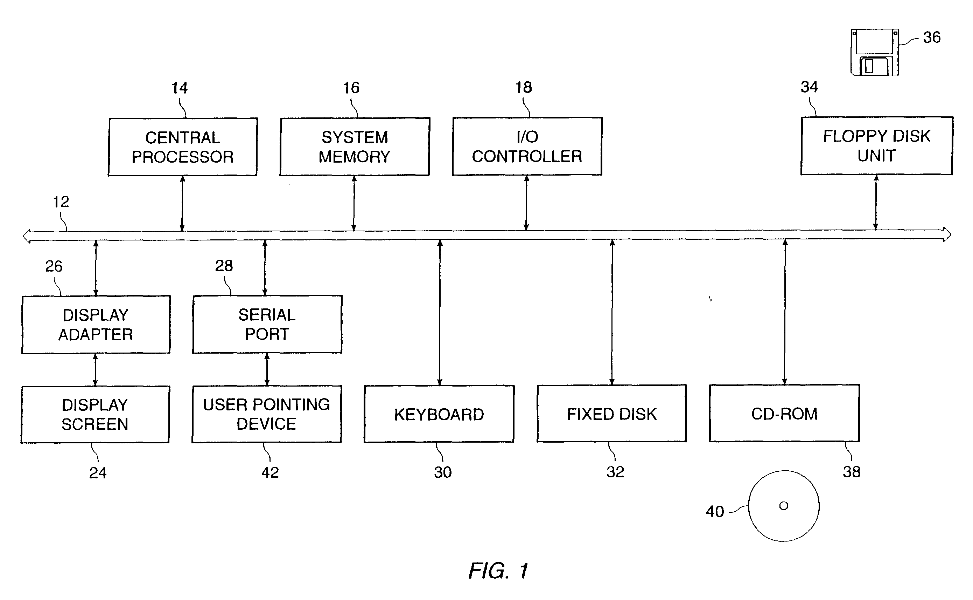

Fig. 1 depicts a computer system 10 suitable for use with the present invention. Computer system 10 includes a bus 12 which interconnects major subsystems such as a central processor 14, a system memory 16 (typically RAM), an input/output (I/O) controller 18, an external device such as a display screen 24 via display adapter 26, serial port 28, a keyboard 30, a fixed disk drive 32, a floppy disk drive 34 operative to receive a floppy disk 36, and a CD-ROM device 38 operative to receive a CD-ROM 40. A user pointing device 42 according to the present invention may connect to serial point 28.

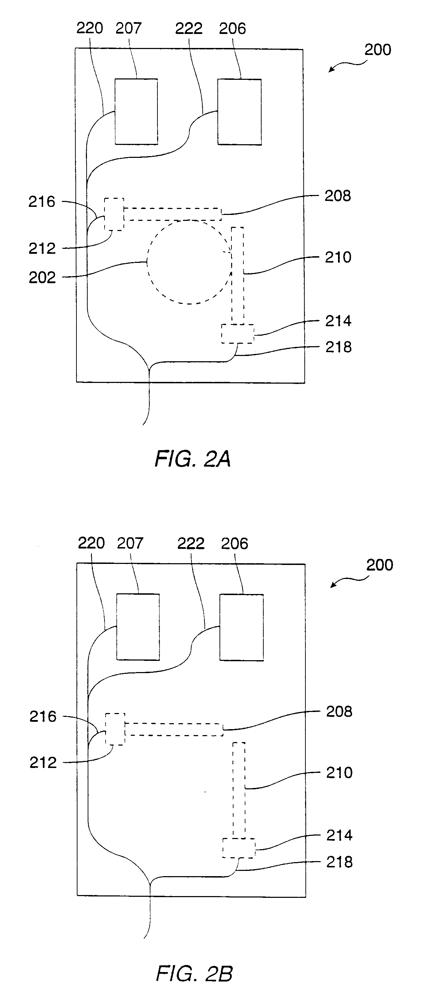

Fig. 2A depicts a mouse 200 employing a ball 202 adapted to roll along a flat surface and modified with touch sensing pads 204 and 206 in accordance with one embodiment of the present invention. Ball 202 engages rollers 208 and 210 which are oriented perpendicular to one another. The rotation of roller 208 represents the motion of mouse 200 along an axis perpendicular to roller 208. Similarly, the rotation of roller 210 represents the motion of mouse 200 along an axis perpendicular to roller 210. Transducers 212 and 214 convert the rotations of rollers 208 and 210 and develop outputs for an x position signal line 216 and a y position signal line 218. The construction of transducers 212 and 214 is known to those of skill in the art. Touch sensing pads 204 and 206 develop outputs for first and second force signal lines 220 and 222 that represent the amount of pressure on the pads.

Fig. 2B depicts a variation of mouse 200 where rollers 208 and 210 are adapted to themselves roll along a flat surface without engaging a ball. The remaining elements are the same as in Fig. 2A.

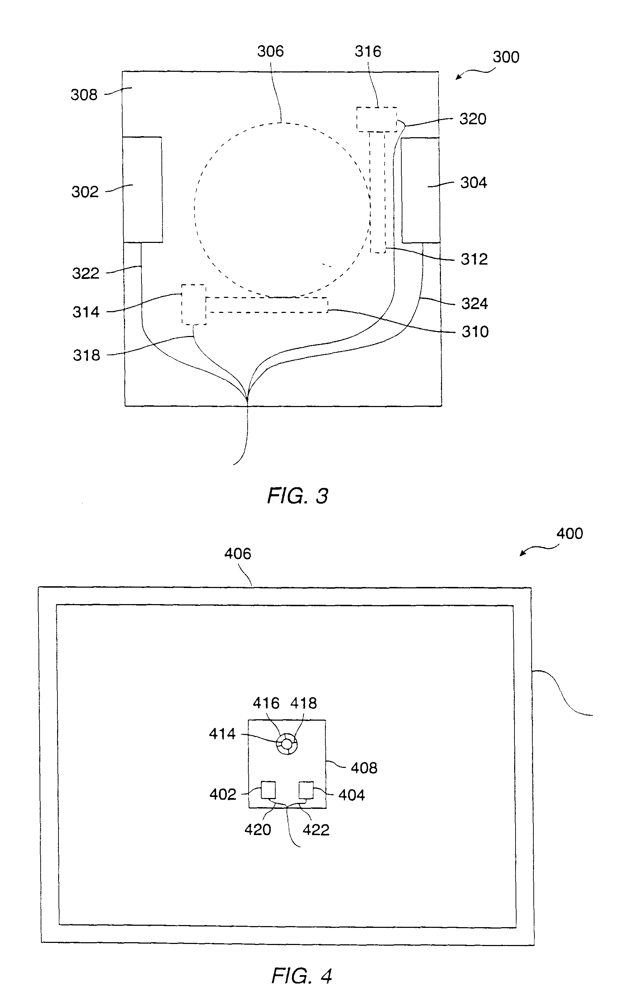

Fig. 3 depicts a trackball device 300 modified with touch sensing pads 302 and 304 in accordance with one embodiment of the present invention. A ball 306 is mounted within a housing 308 so that a user may manipulate the ball to indicate position. Ball 306 engages rollers 310 and 312 which are oriented perpendicular to one another. The rotation of roller 310 represents the rotation of ball 306 about an axis parallel to roller 310. Similarly, the rotation of roller 312 represents the rotation of ball 306 about an axis parallel to roller 310. Transducers 314 and 316 monitor the rotations of rollers 310 and 312 and develop outputs for a y position signal line 318 and an x position signal line 320. The construction of transducers 314 and 316 is known to those of skill in the art. Touch sensing pads 302 and 304 develop outputs for first and second force signal lines 322 and 324 that represent the amount of pressure on the pads.

Fig. 4 depicts a tablet-puck combination device 400 modified with touch sensing pads 402 and 404 in accordance with one embodiment of the present invention. Device 400 includes a fixed tablet 406 and a puck 408. Tablet 406 detects the position of puck 408 by one of any number of techniques known to those of skill in the art. For example, puck 408 may incorporate a low-powered transmitter and tablet 406 may incorporate an array of receiving strips usable to precisely locate the position of puck 408 and develop x and y position signals 410 and 412.

Puck 408 incorporates an aperture 414 surrounded by a clear region 416 with cross hair marks 418 to facilitate the user in specifying a precise position on tablet 406. For example, to trace a line on a printed page, the user can lay the page over tablet 406 and trace aperture 414 over the line. Touch sensing pads 402 and 404 develop outputs for first and second force signal lines 420 and 422 that represent the amounts of pressure on the pads.

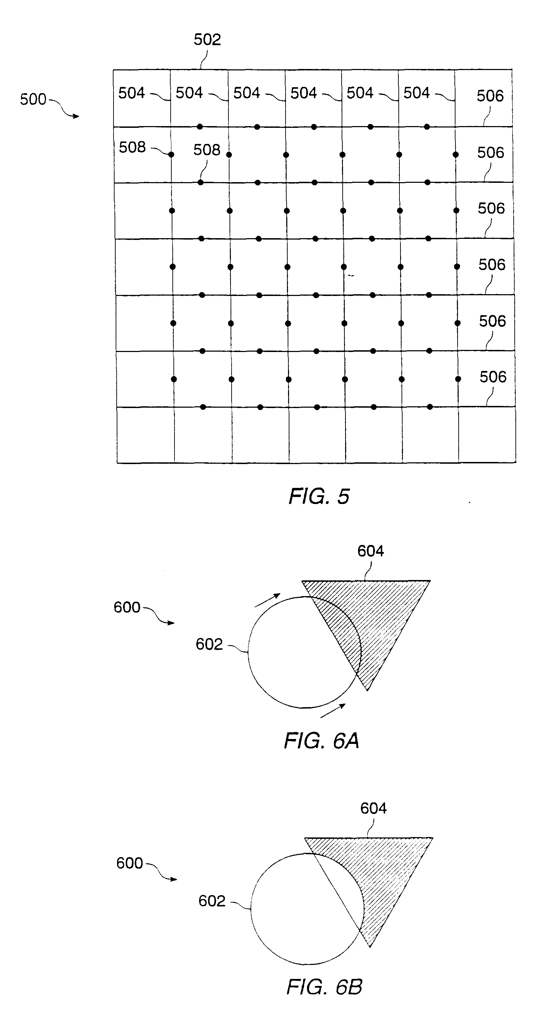

Fig. 5 depicts a touch sensing pad 500 in accordance with one embodiment of the present invention. Touch sensing pad 500 includes a substrate 502 with a first set of conductive traces 504 and a second set of conductive traces 506. Conductive traces 504 are on a top surface of substrate 502. Conductive traces 506 are on a bottom surface of substrate 502. The two sets of conductive traces 504 and 506 are preferably orthogonal to one another. The conductive traces incorporate periodically spaced sense pads 508.

When a user depresses his or her finger on touch sensing pad 500, it affects the capacitance between sense pads 508 and the self-capacitance, or coupling to virtual ground. As the user applies more pressure, more sense pads have their capacitance affected Circuitry (not shown) coupled to conductive traces 504 and conductive traces 506 monitors the change in capacitance on these sense pads and develops a signal indicative of the pressure on the pad.

The particular system for developing the pressure signal is not important to the present invention. A description of one such system is found in U.S. Patent No. 5,374,787 issued to Miller et al., the contents of which are herein incorporated by reference for all purposes. In general, that patent discusses developing a capacitance signal for each conductive line of sets 504 and 506. An X profile curve of pressure results from set 504. A Y profile curve of pressure results from set 506.

In accordance with the present invention, by integrating either profile curve or by averaging the integrals of both profile curves, a signal indicative of user pressure is obtained. It will then be apparent that if only one profile curve is employed, only one set of conductive traces will be necessary to include in touch sensing pad 500.

The present invention is not limited to any particular implementation of touch sensing pad 500. The present invention may take advantage of any pad which develops a pressure signal in accordance with the electric field disturbance generated by the proximity of a conductor such as a user's finger.

Once developed, an analog-to-digital (A-to-D) converter may convert the pressure signal to a digital pressure word to be transmitted to computer system 10. In an alternative embodiment that does not allow computer applications to take advantage of pressure information, touch sensing pad 500 compares the pressure signal to a threshold and transmits a binary pressure indication to computer system 10. A manual control may be provided on the pointing device for adjusting this threshold or circuitry may automatically determine the threshold based on a minimum pressure experienced by pad 500.

In a preferred embodiment, the circuitry necessary to develop either a binary force signal or a digital pressure indicator is incorporated within an analog integrated circuit mounted to touch sensing pad 500 or elsewhere within the user pointing device that includes touch sensing pad 500. Alternatively, portions of the circuitry may be located on an I/O card connected to the bus of computer system 10. For example, a thresholding circuit or A-D converter as discussed above could be located on such an I/O card.

In accordance with the invention, a computer application may take advantage of the pressure information received from touch sensing pad 500 in many ways. In one mode, the computer application responds to touch sensing pad 500 as if it were the button on a mouse, trackball device, or puck. Pressure in excess of a threshold is interpreted as a selection command. This threshold may be adjusted by user input, e.g., by use of an operating system control panel dialog box, or automatically in accordance with a minimum pressure signal received from pad 500. In accordance with the present invention, two thresholds may be set independently, one for use when the pointing function is being used, e.g., the mouse is being used, the trackball is being manipulated, or the puck is being moved over a tablet surface, and another threshold for when the pointing function is not being used. In this way, the user may rest his or her finger on the touch sensing pad while pointing without accidentally triggering a selection function.

In another mode, a computer application reacts not merely to the presence or absence of pressure on touch sensing pad 500 but rather to the degree of pressure. The sensitivity to pressure on touch sensing pad 500 is adjustable either by user input, e.g., by use of an operating system control panel dialog box, or automatically by monitoring changes in the pressure on touch sensing pad 500 over time. The computer application, or other software, may also apply a linear or non-linear transformation to the pressure signal received from touch sensing pad 500 to adjust dynamic range as desired.

Figs. 6A-6B depicts a computer display 600 wherein a first drawing object 602 slides underneath or above a second drawing object 604 responsive to a force signal developed by a touch sensing pad in accordance with one embodiment of the present invention. The user is operating a computer-aided drawing or painting application. The application is currently displaying first drawing object 602 and second drawing object 604. The user wishes to move first drawing object 602 past second drawing object 604 with first drawing object 602 being displayed underneath second drawing object 604 when they overlap.

Using the embodiment of the present invention shown in Fig. 2A, for example, the user moves mouse 200 to position a cursor over first drawing object 602. Once the cursor is over first drawing object 602, the user applies pressure to touch sensing pad 204 to select first drawing object 602. While maintaining pressure on touch sensing pad 204, the user moves mouse 200 to control movement of first drawing object 602.

As first drawing object 602 begins to overlap second drawing object 604, the amount of pressure on touch sensing pad 204 controls whether the first drawing object 602 is displayed above or below second drawing object 604. In accordance with the present invention, the application may interpret heavy pressure as a command to display first drawing object 602 underneath second drawing object 604 and light pressure as a command to display first drawing object 602 above second drawing object 604. Fig. 6A depicts the situation where the user applies heavy pressure and first drawing object 602 slides underneath second drawing object 604. Fig. 6B depicts the situation where the user applies light pressure and first drawing object 602 slides above second drawing object 604.

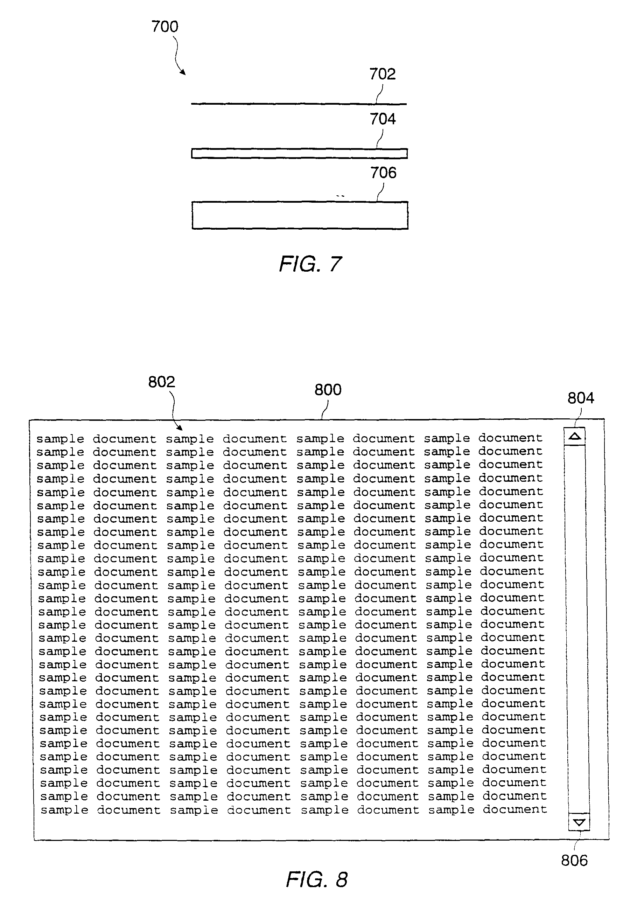

Fig. 7 depicts a computer display 700 wherein a user draws a line with thickness varying responsive to a force signal developed in accordance with one embodiment of the present invention. Again, the user may be operating a computer-aided drawing or painting application. To begin drawing a line, the user selects a line drawing command using a menu or palette (not shown) and manipulates mouse 200 to move a cursor to a desired starting position of the line. The user then applies pressure to touch sensing pad 204 to select the starting position of the line. To draw the line, the user moves mouse 200 to trace out the line while maintaining pressure on touch sensing pad 204.

In accordance with the present invention, the application interprets the pressure on touch sensing pad 204 as indicating the desired thickness of the line. Light pressure indicates that a thin line 702 is desired. Medium pressure indicates that a line 704 of medium thickness is desired. Heavy pressure indicates that a thick line 706 is desired. Although, lines 702, 704, and 706 are shown to be straight, a line with any curvature may be drawn.

Fig. 8 depicts a computer display 800 wherein a user may flip through multiple pages of a document responsive to a force signal developed in accordance with one embodiment of the present invention. Here, the user may be operating an application that displays one or more selected pages of a multiple-page document, such as a word processing or desktop publishing application.

Display 800 shows a selected page 802 of a multiple page document and two page turning icons 804 and 806. To move backward in the document, the user manipulates mouse 200 to position a cursor over page turning icon 804 and then applies pressure to touch sensing pad 204 without further movement of mouse 200. In response, display 800 changes by scrolling backwards through the document. Alternatively, display 800 responds by displaying previous pages of the document discretely in succession. In accordance with the present invention, the application may interpret the amount of pressure on touch sensing pad 204 to be a desired rate of movement through the document and adjust the scrolling or page turning speed accordingly. If the user instead selects page turning icon 806, the user may instead similarly move forward through a document.

There are many other examples of possible contexts and applications of the use of a continuous pressure signal. For example for a computer application that displays video programming, a play, rewind, or fast forward rate may be controlled responsive to the pressure signal similar to the operation of a jog shuttle control on a video cassette recorder. Also, for a computer application that plays audio programming, a play, rewind, or fast forward rate may be similarly controlled.

The invention has now been explained with reference to specific embodiments. Other embodiments will be apparent to those of ordinary skill in the art in view of the foregoing description. For example, it would be possible to substitute a touch sensing pad that reacts to changes in inductance caused by the proximity of a conductor instead of changes in capacitance. Also, the touch sensing pad may be implemented as a pressure sensitive pad that generates a continuous pressure signal and is implemented using a mechanical transducer such as a pressure sensitive potentiometer. It is therefore not intended that this invention be limited except as indicated by the appended claims and equivalents thereto.

## Claims

1. An input device to operate with a computer comprising:
an electric field disturbance sensing pad that generates a force signal responsive to a detected distortion in an electric field proximate to said pad so as to detect a pressure on said pad; and
a transducer separate from said electric field disturbance sensing pad, said transducer generating a position signal.

2. The input device of claim 1 wherein said electric field disturbance sensing pad and said transducer are packaged within a mouse.

3. The input device of claim 1 wherein said electric field disturbance sensing pad and said transducer are packaged within a trackball device.

4. The input device of claim 1 wherein said transducer is incorporated within a tablet and further comprising:
a puck that slides along said tablet, said position signal being generated responsive to motion of said puck along said tablet; and
wherein said electric field disturbance sensing pad is mounted to a surface of said puck.

5. The input device of claim 1 wherein said field disturbance sensing pad comprises a capacitance sensing pad.

6. A computer system including an input device comprising:
a electric field disturbance sensing pad that generates a force signal responsive to a detected distortion in an electric field proximate to said pad so as to detect a pressure on said pad; and
a transducer separate from said electric field disturbance sensing pad, said transducer generating a position signal.

7. The computer system of claim 6 wherein said electric field disturbance sensing pad comprises a capacitance sensing pad.

8. A method of operating a computer application comprising the steps of:
providing a electric field disturbance sensing pad that generates a force signal responsive to a detected distortion in an electric field proximate to said pad so as to detect a pressure on said pad;
providing a transducer separate from said electric field disturbance sensing pad, said transducer generating a position signal; and
controlling operations within said application responsive to a force on said pad as indicated by said force signal.

9. The method of claim 8 wherein said controlling step comprises performing a particular operation if said force exceeds a threshold.

10. The method of claim 9 further comprising the step of:
adjusting said threshold responsive to user input.

11. The method of claim 10 further comprising the step of:
changing said threshold in accordance with said position signal.

12. The method of claim 8 wherein said controlling step comprises the steps of:
moving a first displayed drawing object relative to a second displayed drawing object responsive to said position signal; and
moving said first displayed drawing object underneath said second displayed drawing object responsive to said force signal.

13. The method of claim 8 wherein said controlling step comprises the step of:
displaying a line with a direction and location controlled by said position signal and a thickness controlled by said force signal.

14. The method of claim 8 wherein said computer application displays a selected page of a multiple page document, a cursor, and a page turning icon, and wherein said controlling step comprises the steps of:
displaying said cursor over said page turning icon responsive to said position signal; and
when said cursor is over said page turning icon, changing said selected displayed page at a rate responsive to said force signal.

15. The method of claim 8 wherein said computer application displays a selected portion of a multiple page document, a cursor, and a page turning icon, and wherein said controlling step comprises the steps of:
displaying said cursor over said page turning icon responsive to said position signal; and
when said cursor is over said page turning icon, scrolling through said document at a rate responsive to said force signal.

16. The method of claim 8 further comprising the step of:
adjusting sensitivity of said operations to said force signal responsive to user input.

17. Software on a storage medium for use with a computer system comprising an electric field disturbance sensing pad that generates a force signal responsive to a detected distortion in an electric field proximate to said pad, and a transducer separate from said electric field disturbance sensing pad said transducer generating a position signal, said software operating a computer application, said software controlling operations within said application responsive to a force on said pad as indicated by said force signal.

18. The software of claim 17 comprising software for performing a particular operation if said force exceeds a threshold.

19. The software of claim 17 comprising:
software for adjusting said threshold responsive to user input.

20. The software of claim 19 further comprising:
software for changing said threshold responsive to said position signal.

21. The software of claim 17 comprising:
software for moving a first displayed drawing object relative to a second displayed drawing object responsive to said position signal; and
software for moving said first displayed drawing object underneath said second displayed drawing object responsive to said force signal.

22. The software of claim 17 comprising:
software for displaying a line with a direction and location controlled by said position signal and a thickness controlled by said force signal.

23. The software of claim 17 wherein said computer application displays a selected page of a multiple page document, a cursor, and a page turning icon, comprising:
software for displaying said cursor over said page turning icon responsive to said position signal; and
software for when said cursor is over said page turning icon, changing said selected displayed selecting page at a rate responsive to said force signal.

24. The software of claim 17 wherein said computer application displays a selected portion of a multiple page document, a cursor, and a page turning icon, comprising:
software for displaying said cursor over said page turning icon responsive to said position signal; and
software for, when said cursor is over said page turning icon, scrolling through said document at a rate responsive to said force signal.

25. The software of claim 17 further comprising:
software for adjusting sensitivity of said operations to said force signal responsive to user input.

26. The software of claim 17 wherein said computer application displays a video program, said software comprising:
software for adjusting a play rate of said video program responsive to user input.

27. The software of claim 17 wherein said computer application plays an audio program, said software comprising:
software for adjusting a play rate of said audio material responsive to user input.

28. Software on a storage medium for use with a computer system comprising a pressure sensitive pad that generates a force signal responsive to a detected pressure on said pad, and a transducer separate from said pressure sensitive pad said transducer generating a position signal, said software operating a computer application, said software controlling operations within said application responsive to continuous variation in said force signal.

29. The software of claim 28 comprising:
software for moving a first displayed drawing object relative to a second displayed drawing object responsive to said position signal; and
software for moving said first displayed drawing object underneath said second displayed drawing object responsive to said force signal.

30. The software of claim 28 comprising:
software for displaying a line with a direction and location controlled by said position signal and a thickness controlled by said force signal.

31. The software of claim 28 wherein said computer application displays a selected page of a multiple page document, a cursor, and a page turning icon, comprising:
software for displaying said cursor over said page turning icon responsive to said position signal; and
software for when said cursor is over said page turning icon, changing said selected displayed selecting page at a rate responsive to said force signal.

32. The software of claim 28 wherein said computer application displays a selected portion of a multiple page document, a cursor, and a page turning icon, comprising:
software for displaying said cursor over said page turning icon responsive to said position signal; and
software for, when said cursor is over said page turning icon, scrolling through said document at a rate responsive to said force signal.

33. The software of claim 28 further comprising:
software for adjusting sensitivity of said operations to said force signal responsive to user input.

34. The software of claim 28 wherein said computer application displays a video program, said software comprising:
software for adjusting a play rate of said video program responsive to user input.

35. The software of claim 28 wherein said computer application plays an audio program, said software comprising:
software for adjusting a play rate of said audio material responsive to user input.

36. An input device to operate with a computer comprising:
an pressure sensitive pad that generates a force signal responsive to a pressure on said pad; and
a transducer separate from said pressure sensitive pad, said transducer generating a position signal.
